# FASCICULE DE BREVET EUROPEEN

(11) **EP 3 059 380 B1**
(45) Date de publication et mention de la délivrance du brevet: **24.10.2018**
(21) Numéro de dépôt: 16156308.5
(22) Date de dépôt: 18.02.2016
(51) Int. Cl.: E06B 9/58, F16J 15/06

(54) **COULISSE DE DISPOSITIF DE FERMETURE**
GLEITABSCHLUSSGERÄT
SLIDING CLOSURE DEVICE

(30) Priorité: 20.02.2015 FR 1551444
(43) Date de publication de la demande: 24.08.2016
(73) Titulaire: BUBENDORFF, 68220 Attenschwiller (FR)
(72) Inventeur: BIRKER, Arnaud, 68440 DIETWILLER (FR); BUBENDORF, Robert, 68220 ATTENSCHWILLER (FR)
(74) Mandataire: Faetibold, Emmanuel

(56) Documents cités:
- CH-A1- 704 321
- DE-U1-202004 013 337
- FR-A1- 3 003 889
- US-A- 4 649 981
- US-A1- 2012 012 261

## Description

La présente invention a trait à une coulisse de dispositif de fermeture comportant au moins un joint de coulisse ainsi qu'à un dispositif de fermeture comportant une telle coulisse.

L'invention concerne le domaine du bâtiment et, plus particulièrement, celui de la fabrication des dispositifs conçus pour assurer la fermeture d'une ouverture que comporte une construction.

L'on connait, d'ores et déjà, de tels dispositifs de fermeture qui adoptent la forme d'un volet roulant comportant, usuellement, un tablier constitué par une pluralité de lames assemblées de manière articulée. Ce volet roulant comporte, encore, un système de déploiement et de repliement de ce tablier. Ce volet roulant comporte, aussi, des coulisses latérales adoptant, chacune, la forme d'un profilé présentant une rainure à l'intérieur de laquelle défile une extrémité latérale dudit tablier.

Une telle coulisse comporte, usuellement et intérieurement, au moins un logement longitudinal ainsi qu'au moins un joint comportant, d'une part, une partie interne engagée à l'intérieur d'un tel logement longitudinal et adoptant une forme en « T ». D'autre part, un tel joint comporte une partie externe, s'étendant à l'extérieur de ce logement longitudinal ainsi qu'à l'intérieur de la coulisse, et adoptant la forme d'une brosse dont les poils s'étendent à partir de la partie interne de ce joint. Lors de son défilement à l'intérieur des coulisses, le tablier entre en contact avec les poils de cette brosse qui, du fait de leur élasticité, restent en applique contre ce tablier.

L'utilisation d'un tel joint présente un certain nombre d'inconvénients. En particulier, ce joint comporte deux parties (partie interne et partie externe) présentant des formes et des caractéristiques différentes qui complexifient la conception d'un tel joint et en renchérissent le coût.

De plus, un tel joint comporte une brosse dont les poils sont élastiques. Cependant, sous l'effet des sollicitations et du vieillissement, ces poils perdent de leur élasticité, s'usent, et présentent des déformations qui ne permettent plus au joint d'accomplir sa fonction.

En outre, la poussière, le sable et la terre ont tendance à s'accumuler à l'intérieur des poils d'une telle brosse ce qui rend le joint abrasif. Ceci a pour effet de rayer le tablier, de provoquer une usure prématurée de ce tablier, d'entraver le coulissement de ce tablier, et de nuire à l'étanchéité entre ce tablier et le joint.

Par le document US-4.649.981 on connait une coulisse, à l'intérieur de laquelle défile un panneau, et comportant un profilé, au moins un joint positionné à l'intérieur de ce profilé, et des moyens de fixation d'un tel joint à l'intérieur de ce profilé. De tels moyens de fixation adoptent la forme d'une bande adhésive positionnée dans le fond du profilé. L'utilisation de tels moyens de fixation présente de nombreux inconvénients. En particulier, ces moyens de fixation constituent un élément spécifique et additionnel. De plus, ces moyens de fixation sont positionnés dans le fond du profilé de sorte que leur mise en place est difficile en raison, d'une part, de la configuration du profilé et, d'autre part, du caractère adhésif de ces moyens de fixation. Pour les mêmes raisons, le positionnement du joint à l'intérieur du profilé est, également, difficile. Finalement, ces moyens de fixation sont exposés à des dégradations sous l'effet du vieillissement (notamment de la colle) et/ou à des contraintes physiques exercées par le panneau, notamment lors de son défilement dans les coulisses et/ou du fait de son déplacement sous l'effet de contraintes météorologiques (plus particulièrement du vent). Une coulisse similaire est aussi divulguée dans DE 20 2004 013 337 U1.

La présente invention se veut de remédier aux inconvénients des dispositifs de finition de l'état de la technique.

A cet effet, l'invention concerne une coulisse de dispositif de fermeture, cette coulisse comportant :
- un profilé, présentant une section en « U », et comportant un fond ainsi que deux parois parallèles, s'étendant à partir de ce fond, et dont l'une au moins comporte un logement présentant une première gorge ainsi qu'une deuxième gorge ;
- au moins un joint, un tel joint étant constitué par un élément de forme allongée présentant une section en « V », et comportant, d'une part, une embase, constituée par une des branches du « V », positionnée à l'intérieur du logement de l'une des parois du profilé, comportant une première extrémité libre ainsi qu'une deuxième extrémité opposée à la première extrémité libre, et, d'autre part, une lèvre, constituée par l'autre branche du « V », se situant dans le prolongement de ladite embase, et s'étendant, d'une part, à partir de la deuxième extrémité opposée de cette embase, ceci de manière longitudinale et latérale ainsi qu'en formant un angle aigüe avec cette embase et, d'autre part, au moins en partie à l'extérieur du logement de la paroi du profilé ainsi qu'à l'intérieur de la coulisse ;
- des moyens de maintien pour maintenir le ou les joints à l'intérieur du ou des logements, ces moyens de maintien étant constitués, d'une part, par la première gorge, que comportent ce ou ces logements, et qui reçoit la première extrémité libre de l'embase de ce ou de ces joints et, d'autre part, par la deuxième gorge, que comportent ce ou ces logements, et qui reçoit la deuxième extrémité opposée de l'embase de ce ou de ces joints.

Une caractéristique additionnelle consiste en ce que l'élément de forme allongée est constitué par une bande comportant, d'une part, une première portion longitudinale constituant ladite embase et, d'autre part, une deuxième portion longitudinale, constituant ladite lèvre, s'étendant et repliée par-dessus au moins une partie de la première portion longitudinale.

Selon une autre caractéristique, l'élément de forme allongée présente un pli marqué et pérenne à la jonction entre l'embase et la lèvre.

Encore une autre caractéristique consiste en ce que l'élément de forme allongée est réalisé en un matériau déformable, flexible et/ou élastique.

Encore une autre caractéristique consiste en ce que le ou les logements, d'une part, présentent une section en forme de « T » ou de queue d'aronde et, d'autre part, sont définis par une des parois du profilé ainsi que par deux ailes longitudinales s'étendant à partir de cette paroi du profilé et orientées en direction de l'autre paroi du profilé.

Selon une caractéristique additionnelle, la première gorge que présente le logement de la paroi du profilé est délimitée par cette paroi du profilé ainsi que par une des ailes définissant ce logement tandis que la deuxième gorge que présente ce logement est délimitée par cette paroi du profilé ainsi que par l'autre aile définissant ce logement.

L'invention concerne, aussi, un dispositif de fermeture comportant, d'une part, deux coulisses latérales, d'autre part, un tablier présentant deux extrémités latérales dont l'une coulisse à l'intérieur de l'une des coulisses latérales tandis que l'autre coulisse à l'intérieur de l'autre coulisse latérale. Dans ce dispositif, les coulisses latérales présentent les caractéristiques de la coulisse décrite ci-dessus tandis que les extrémités latérales du tablier comportent des moyens d'appui contre lesquels prend appui la lèvre du ou des joints que comportent les coulisses latérales.

Finalement, l'invention concerne un procédé de fabrication d'une coulisse présentant les caractéristiques décrites ci-dessus. Ce procédé consiste en ce que :
- on déroule une bande enroulée sur une bobine ;
- par-dessus une première portion longitudinale de la bande, on replie une deuxième portion longitudinale de cette bande, ceci pour la réalisation d'un joint de coulisse ;
- on engage au moins cette première portion longitudinale de la bande à l'intérieur d'un logement que comporte une des parois d'un profilé que comporte une coulisse.

Ainsi, l'invention concerne un joint de coulisse constitué par un élément de forme allongée présentant une section en « V » et comportant une embase (constituée par une des branches du « V ») ainsi qu'une lèvre (constituée par l'autre branche du « V »). Ainsi, ce joint de coulisse est constitué par un élément qui présente une forme particulièrement simple (avec une section en « V »), et notablement simplifiée par rapport aux joints de coulisse de l'état de la technique. Cette forme simple facilite, avantageusement, la conception et la fabrication d'un tel joint de coulisse, ceci par rapport à la conception et à la fabrication des joints de l'état de la technique.

De plus, cette forme simple rend ledit joint plus résistant aux sollicitations et moins sensible aux effets du vieillissement que les joints de l'état de la technique.

En outre, ce joint de coulisse est constitué par un élément monobloc qui permet, avantageusement, d'accroître la fiabilité et la pérennité d'un tel joint de coulisse par rapport aux joints de coulisse de l'état de la technique.

De manière additionnelle, cet élément de forme allongée est constitué par une bande comportant une portion longitudinale repliée par-dessus une autre portion longitudinale. La réalisation d'un tel élément (par simple pliage d'une bande) facilite considérablement le procédé de fabrication d'un joint de coulisse, ceci par rapport aux procédés de fabrication des joints de coulisse de l'état de la technique.

Une autre caractéristique consiste en ce que l'élément de forme allongée est réalisé en un matériau déformable, flexible et/ou élastique.

La nature de ce matériau permet, avantageusement, au joint de coulisse (plus particulièrement à la lèvre de ce joint) de prendre appui contre le tablier du dispositif de fermeture et de rester en appui contre ce tablier malgré les contraintes (notamment le vent) qui s'exercent sur ce tablier. Ceci permet, avantageusement et quelles que soient les circonstances, d'amortir le bruit et de renforcer l'étanchéité à l'air ainsi qu'à la lumière du dispositif de fermeture.

De plus, en restant en appui contre le tablier, un tel joint assure, également, la retenue de ce tablier dans le plan horizontal (perpendiculairement au plan de ce tablier) ce qui est bénéfique pour la tenue au vent de ce tablier.

Tel que mentionné ci-dessus, la coulisse comporte un profilé comportant deux parois parallèles dont l'une au moins comporte un logement présentant une première et une deuxième gorge. Cette coulisse comporte, encore, des moyens de maintien du ou des joints à l'intérieur de ce ou ces logements, ces moyens de maintien étant constitués par cette première gorge ainsi que par cette deuxième gorge. De manière avantageuse, de tels moyens de maintien présentent une forme simple et **sont** aisés à réaliser (notamment lors de la fabrication du profilé, plus particulièrement par extrusion). Ces moyens de maintien permettent d'assurer un maintien efficace et pérenne du ou des joints à l'intérieur de la coulisse. De plus, de tels moyens de maintien permettent d'éviter d'avoir recours à un système de fixation additionnel et spécifique (notamment sous forme d'une bande adhésive), qui plus est difficile à mettre en oeuvre (car implanté dans le fond de la coulisse et adhésif) et exposé aux dégradations sous l'effet du vieillissement et/ou des contraintes exercées par le tablier, notamment lors de son défilement à l'intérieur des coulisses ou du fait de son déplacement sous l'effet de contraintes météorologiques (vent).

Tel que mentionné ci-dessus, les extrémités latérales du tablier comportent des moyens d'appui contre lesquels prend appui la lèvre du ou des joints que comportent les coulisses latérales.

En fait, une telle lèvre prend appui contre ces moyens d'appui lorsqu'il est exercé, sur le tablier, une contrainte (notamment exercée par le vent) susceptible de provoquer la sortie de l'extrémité latérale du tablier hors d'une coulisse latérale. La présence de ces moyens d'appui permet, alors et en combinaison avec la lèvre du ou des joints, de retenir le tablier à l'intérieur des coulisses latérales et d'empêcher la sortie du tablier hors d'une telle coulisse. Ceci permet, donc, d'assurer la retenue de ce tablier dans le plan horizontal (parallèlement au plan de ce tablier) ce qui est, là encore, bénéfique pour la tenue au vent de ce tablier. En assurant une telle retenue, il est, avantageusement, possible d'éviter de recourir à des moyens additionnels conçus pour empêcher la flexion du tablier (système anti-flexion).

L'invention concerne, également, un procédé de fabrication d'une coulisse incorporant au moins un joint de coulisse. Ce procédé consiste, en particulier, en ce qu'on déroule une bande enroulée sur une bobine et en ce qu'on plie cette bande pour réaliser un joint de coulisse.

Un tel procédé permet de réaliser un joint de coulisse à partir d'un bande enroulée sur une bobine ce qui permet, avantageusement et du fait de la faible épaisseur d'une telle bande par rapport aux joints de coulisse de l'état de la technique, d'enrouler une grande longueur de bande sur une telle bobine et, ainsi, de diminuer fortement le volume de stockage par rapport aux joints de coulisse de l'état de la technique.

Ce procédé consiste, également, en ce que l'on réalise un tel joint de coulisse en pliant une bande telle que mentionné ci-dessus. Un tel pliage constitue une opération considérablement moins complexe que celles actuellement connues (notamment par extrusion ou coextrusion) pour réaliser un joint de coulisse de l'état de la technique.

De plus, ce procédé consiste à engager la première portion longitudinale de la bande à l'intérieur d'un logement de l'une des parois d'un profilé de la coulisse, ceci en enfilant cette première portion longitudinale de la bande à l'intérieur de ce logement. Un tel enfilage simplifie la mise en place du joint à l'intérieur de la coulisse.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

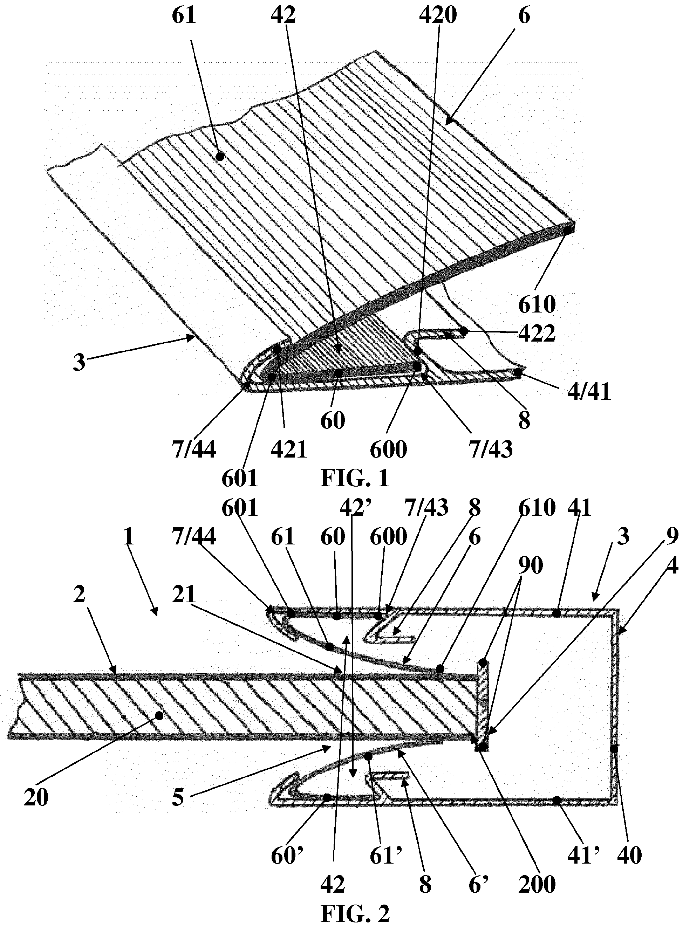

- la figure 1 est une vue schématisée, partielle et en perspective d'une coulisse de dispositif de fermeture comportant un joint de coulisse ;
- la figure 2 est une vue schématisée, partielle et de dessus, d'un dispositif de fermeture.

La présente invention concerne le domaine du bâtiment et, plus particulièrement, celui de la fabrication des dispositifs conçus pour assurer la fermeture d'une ouverture que comporte une construction. Un tel dispositif de fermeture vient, usuellement, compléter une porte, une fenêtre ou analogue équipant une telle ouverture.

Dans la suite de la description, il sera fait référence à un dispositif de fermeture 1 adoptant la forme d'un volet roulant sachant que l'invention n'y est aucunement limitée.

Un tel dispositif de fermeture 1 comporte, alors, un tablier 2, d'une part, constitué par une pluralité de lames 20 assemblées de manière articulée et, d'autre part, présentant des extrémités latérales 21.

Ce dispositif de fermeture 1 comporte, encore, un système (non représenté) de déploiement et de repliement de ce tablier 2, un tel système pouvant être à commande manuelle ou motorisée.

Ledit dispositif de fermeture 1 comporte, aussi et de part et d'autre de ce dispositif de fermeture 1 (plus particulièrement de part et d'autre du tablier 2), une coulisse latérale 3 comportant un profilé 4, d'une part, présentant une section en « U » et, d'autre part, comportant un fond 40 ainsi que deux parois parallèles (41 ; 41') s'étendant à partir de ce fond 40.

En fait, ce fond 40 et ces parois parallèles (41 ; 41') définissent, alors, une rainure 5 à l'intérieur de laquelle défile une extrémité latérale 21 dudit tablier 2.

On observera qu'au moins une de ces parois parallèles (41 ; 41') comporte au moins un logement longitudinal (42 ; 42'). Selon un mode de réalisation préféré chacune de ces parois parallèles (41 ; 41') comporte au moins un tel logement longitudinal (42 ; 42'). En fait et tel qu'il sera décrit plus en détail ci-dessous, un tel logement (42 ; 42') présente une première gorge 43 ainsi qu'une deuxième gorge 44.

Une telle coulisse latérale 3 comporte, également, au moins un joint (6 ; 6') équipant au moins une des parois parallèles (41 ; 41') du profilé 4.

A ce propos, on observera qu'une telle coulisse latérale 3 comporte, de préférence, deux joints (6 ; 6') dont l'un 6 équipe l'une 41 des parois parallèles (41 ; 41') tandis que l'autre 6' équipe l'autre paroi parallèle 41'. Ces deux joints (6 ; 6') sont, de préférence, positionné en vis-à-vis l'un (6 ; 6') de l'autre (6' ; 6).

Un tel joint (6 ; 6') est constitué par un élément de forme allongée présentant une section en « V ». En fait, un tel joint (6 ; 6') est constitué, avantageusement, par un élément monobloc de forme allongée présentant une telle section en « V ».

Un tel joint (6 ; 6') comporte une embase (60 ; 60'), constituée par une des branches du « V », et destinée à être positionnée à l'intérieur d'un des logements (42 ; 42') que comporte ladite coulisse 3. Une telle embase (60 ; 60') comporte une première extrémité 600 libre ainsi qu'une deuxième extrémité 601 opposée à la première extrémité libre 600.

Un tel joint (6 ; 6') comporte, également, une lèvre (61 ; 61'), constituée par l'autre branche du « V », se situant dans le prolongement de ladite embase (60 ; 60'), et s'étendant à partir de cette embase (60 ; 60'), plus particulièrement à partir de la deuxième extrémité opposée 601 de cette embase (60 ; 60'), ceci de manière longitudinale et latérale ainsi qu'en formant un angle aigüe avec cette embase (60 ; 60').

Une telle lèvre (61 ; 61') est destinée à s'étendre au moins en partie à l'extérieur du logement (42 ; 42') de la paroi (41 ; 41') du profilé 4 de la coulisse 3 ainsi qu'à l'intérieur de la coulisse 3.

Une autre caractéristique d'un tel joint (6 ; 6') consiste en ce que l'élément de forme allongée est constitué par une bande comportant, d'une part, une première portion longitudinale et, d'autre part, une deuxième portion longitudinale, s'étendant par-dessus au moins une partie de la première portion longitudinale, et repliée par-dessus au moins une telle partie de la première portion longitudinale.

En fait, ladite deuxième portion longitudinale s'étend et est repliée par-dessus l'intégralité de la première portion longitudinale.

Tel que visible sur les figures en annexe, ladite deuxième portion longitudinale est repliée par-dessus l'intégralité de la première portion longitudinale et s'étend même au-delà de cette première portion longitudinale.

En fait, ladite première portion longitudinale de la bande constitue ladite embase (60 ; 60') tandis que la deuxième portion longitudinale de la bande constitue ladite lèvre (61 ; 61').

Ainsi, ladite lèvre (61 ; 61') s'étend par-dessus au moins une partie de l'embase (60 ; 60') et est repliée par-dessus au moins une partie de cette embase (60 ; 60').

En fait, ladite lèvre (61 ; 61') s'étend et est repliée par-dessus l'intégralité de l'embase (60 ; 60'), voire (et de préférence) s'étend au-delà de cette embase (60 ; 60').

Une autre caractéristique de cet élément de forme allongée consiste en ce qu'il est réalisé en un matériau déformable, de préférence flexible et/ou élastique.

Selon un mode préféré de réalisation, cet élément de forme allongée est réalisé en un matériau polymère, de préférence du polyamide.

Cet élément de forme allongée présente, alors, une épaisseur comprise entre 0,3mm et 0,7mm, de préférence de l'ordre de 0,5mm.

De manière alternative, cet élément de forme allongée peut être réalisé en un matériau composite, de préférence constitué par un tissu enduit ou imprégné avec une résine.

La résine d'enduction ou d'imprégnation est constituée par une résine plastifiante et/ou rigidifiante.

Cet élément de forme allongée présente, alors, une épaisseur comprise entre 0,5mm et 1mm, de préférence de l'ordre de 0,7mm.

Tel que mentionné ci-dessus, le joint (6 ; 6') comporte une embase (60 ; 60') ainsi qu'une lèvre (61 ; 61').

Aussi et selon une autre caractéristique, cette lèvre (61 ; 61') présente une largeur supérieure à la largeur de l'embase (60 ; 60'). Ceci permet, alors et tel que mentionné ci-dessus, à une telle lèvre (61 ; 61') de s'étendre et d'être repliée par-dessus l'intégralité de l'embase (60 ; 60'), voire (et de préférence) de s'étendre au-delà de cette embase (60 ; 60').

Encore une autre caractéristique consiste en ce qu'essentiellement cette lèvre (61 ; 61') (voire encore cette embase (60 ; 60')) sont réalisées en un matériau déformable, de préférence flexible et/ou élastique, correspondant à celui (susmentionné) de l'élément de forme allongée. Ceci permet, alors, à cette lèvre (60 ; 60') de prendre appui et de rester en appui contre le tablier 2 malgré les contraintes qui s'exercent sur ce tablier 2.

Une telle lèvre (61 ; 61') présente une extrémité libre 610 ainsi qu'une extrémité, opposée à cette extrémité libre 610, dans le prolongement de laquelle se situe l'embase (60 ; 60') et à partir de laquelle s'étend cette embase (60 ; 60'), ceci de manière longitudinale et latérale.

Tel que mentionné ci-dessus, cette embase (60 ; 60') comporte la première extrémité libre 600 ainsi que la deuxième extrémité opposée 601, d'une part, dans le prolongement de laquelle se situe la lèvre (61 ; 61'), plus particulièrement l'extrémité opposée à l'extrémité libre 610 de cette lèvre (61 ; 61') et, d'autre part, à partir de laquelle s'étend cette lèvre (61 ; 61'), ceci de manière longitudinale et latérale.

En fait et selon un mode de réalisation préféré, l'extrémité libre 610 de la lèvre (61 ; 61') s'étend au-delà de l'extrémité libre 600 de l'embase (60 ; 60').

Une autre caractéristique de l'élément de forme allongée consiste en ce qu'il présente un pli marqué et pérenne à la jonction entre l'embase (60 ; 60') et la lèvre (61 ; 61').

La présence de ce pli marqué et pérenne permet, avantageusement, à l'élément de forme allongée (donc au joint 6 ; 6') de rester plié et d'empêcher cet élément de forme allongée de revenir dans une configuration plane. Ce pli marqué et pérenne permet, également, de délimiter l'embase (60 ; 60'), plus particulièrement de délimiter l'extrémité opposée 601 de cette embase (60 ; 60'), et/ou de fixer la largeur de cette embase (60 ; 60').

Bien entendu, le matériau, mentionné ci-dessus et dans lequel est réalisé cet élément de forme allongé (donc le ou les joints 6 ; 6'), est choisi en sorte de permettre la réalisation d'un tel pli marqué et pérenne.

L'invention concerne, en fait, une coulisse 3 de dispositif de fermeture 1, une telle coulisse 3 présentant les caractéristiques décrites ci-dessus.

En particulier, une telle coulisse 3 comporte, d'une part, le profilé 4 susmentionné présentant une section en « U » et comportant le fond 40 ainsi que les deux parois parallèles (41 ; 41') s'étendant à partir de ce fond 40 et, d'autre part, au moins un joint (6 ; 6') équipant au moins une des parois parallèles (41 ; 41') du profilé 4.

Un tel joint (6 ; 6') présente les caractéristiques décrites ci-dessus.

Selon une autre caractéristique l'embase (60 ; 60') du ou des joints (6 ; 6') s'étend en direction du fond 40 du profilé 4 de la coulisse 3, ceci à partir de la lèvre (61 ; 61') de ce ou ces joints (6 ; 6').

De manière additionnelle, la lèvre (61 ; 61') du ou des joints (6 ; 6') s'étend en direction du fond 40 du profilé 4 de la coulisse 3, ceci à partir de l'embase (60 ; 60') de ce ou ces joints (6 ; 6').

Tel que mentionné ci-dessus, la ou les parois parallèles (41 ; 41') du profilé 4 comportent un logement (42 ; 42').

Aussi et selon une autre caractéristique, l'embase (60 ; 60') du ou des joints (6 ; 6') est positionnée à l'intérieur de ce ou ces logements (42 ; 42') tandis que la lèvre (61 ; 61') de ce ou ces joints (6 ; 6') s'étend au moins en partie à l'extérieur de ce ou ces logements (42 ; 42').

En fait et tel que visible sur les figures en annexe, les deux parois parallèles (41 ; 41') du profilé 4 comportent, chacune, un logement (42 ; 42'). L'embase (60 ; 60') des joints (6 ; 6') est positionnée à l'intérieur de ces logements (42 ; 42') tandis que la lèvre (61 ; 61') de ces joints (6 ; 6') s'étend à l'extérieur de ces logements (42 ; 42').

On observera que ce ou ces logements (42 ; 42'), d'une part, présentent une section en forme de « T » ou (et de préférence comme visible sur les figures en annexe) de queue d'aronde et, d'autre part, sont définis par une des parois (41 ; 41') du profilé 4 ainsi que par deux ailes longitudinales (420, 421) s'étendant à partir de cette paroi (41 ; 41') du profilé 4 et orientées en direction de l'autre paroi (41' ; 41) du profilé 4.

En fait, lorsque ce ou ces logements (42 ; 42') présentent une section en queue d'aronde, un tel logement (42 ; 42') est défini par deux ailes (420, 421) inclinées l'une 420 en direction de l'autre 421 et s'étendant à partir d'une telle paroi (41 ; 41') en convergeant.

Dans un pareil cas, les ailes (420, 421) définissant le ou les logements (42 ; 42') s'étendant à partir de la ou des parois (41 ; 41') en formant un angle aigüe avec cette ou ces parois (41 ; 41').

Cependant et lorsque le ou les logements (42 ; 42') présentent une section en « T », un tel logement (42 ; 42') est défini par deux ailes chacune, d'une part, s'étendant de manière perpendiculaire à la paroi (41 ; 41') du profilé 4 et à partir de cette paroi (41 ; 41') et, d'autre part, présentant un retour orienté en direction de l'autre aile.

Tel que mentionné ci-dessus, un tel logement (42 ; 42') présente une première gorge 43 ainsi qu'une deuxième gorge 44.

En fait, la première gorge 43 que présente le logement (42 ; 42') de la paroi (41 ; 41') du profilé 4 est délimitée par cette paroi (41 ; 41') du profilé 4 ainsi que par une (420) des ailes (420, 421) définissant ce logement (42 ; 42') tandis que la deuxième gorge 44 que présente ce logement (42 ; 42') est délimitée par cette paroi (41 ; 41') du profilé 4 ainsi que par l'autre aile (421) définissant ce logement (42 ; 42').

Une autre caractéristique consiste en ce que la coulisse 3 comporte des moyens de maintien 7 pour maintenir le ou les joints (6 ; 6') à l'intérieur du ou des logements (42 ; 42'). Ces moyens de maintien 7 sont constitués, d'une part, par la première gorge 43, que comportent ce ou ces logements (42 ; 42'), et qui reçoit la première extrémité libre 600 de l'embase (60 ; 60') de ce ou de ces joints (6 ; 6').

D'autre part, ces moyens de maintien 7 sont constitués par la deuxième gorge 44, que comportent ce ou ces logements (42 ; 42'), et qui reçoit la deuxième extrémité opposée 601 de l'embase (60 ; 60') de ce ou de ces joints (6 ; 6').

A ce propos, on observera que, de manière alternative ou additionnelle à cette deuxième gorge 44, ces moyens de maintien 7 peuvent être constitués par l'autre aile 421 définissant ce logement (42 ; 42') et contre laquelle prend appui la lèvre (61 ; 61') du ou des joints (6 ; 6').

A ce propos, on observera que la courbure de cette autre aile 421 définissant ce logement (42 ; 42') et/ou l'angle que forme cette autre aile 421 avec ladite paroi (41 ; 41') de profilé 4 sont choisis pour assurer un maintien approprié.

Une autre caractéristique consiste en ce que la première extrémité libre 600 de l'embase (60 ; 60') du ou des joints (6 ; 6') est positionnée dans le fond de la première gorge 43 du ou des logements (42 ; 42') tandis que la deuxième extrémité opposée 601 de l'embase (60 ; 60') de ce ou de ces joints (6 ; 6') est positionnée dans le fond de la deuxième gorge 44 de ce ou de ces logements (42 ; 42').

De plus et tel que visible sur les figures en annexe, la première extrémité libre 600 de l'embase (60 ; 60') vient en butée contre le fond de la première gorge 43 tandis que la deuxième extrémité opposée 601 de l'embase (60 ; 60') vient en butée contre le fond de la deuxième gorge 44.

A ce propos, on observera que le maintien du ou des joints (6 ; 6') à l'intérieur du ou des logements (42 ; 42') par l'intermédiaire desdits moyens de maintien 7 susmentionnés est amélioré par la présence du pli marqué et pérenne susmentionné et à ses avantages.

Une caractéristique additionnelle consiste en ce qu'essentiellement l'embase (60 ; 60') de ce ou ces joints (6 ; 6'), voire encore la ou les lèvres (61 ; 61'), sont réalisées en un matériau, correspondant à celui (susmentionné) de l'élément de forme allongée, et présentant une rigidité suffisante pour permettre le maintien d'un tel joint (6 ; 6') à l'intérieur d'un tel logement (42 ; 42').

Encore une autre caractéristique consiste en ce que la coulisse 3 comporte au moins une butée 8, d'une part, contre laquelle prend appui la partie de la lèvre (61 ; 61') du ou des joints (6 ; 6') s'étendant à l'extérieur du ou des logements (42 ; 42'), plus particulièrement lorsqu'une telle lèvre (61 ; 61') est repoussée en direction de la paroi (41 ; 41') qui est équipée avec une telle lèvre (61 ; 61'), notamment sous l'effet d'une contrainte (par exemple le vent) exercée sur le tablier 2. D'autre part, une telle butée 8 est constituée par un retour 422 que comporte une 420 des ailes (420 ; 421) définissant ce ou ces logements (42 ; 42') et qui est orienté dans une direction opposée à celle de l'autre aile 421 définissant ce ou ces logements (42 ; 42'). Tel que visible sur les figures en annexe, un tel retour 422 est orienté en direction du fond 40 du profilé 4 de la coulisse 3.

La présence d'une telle butée 8 permet, avantageusement, d'éviter d'occasion une détérioration à la lèvre (61 ; 61') lorsque celle-ci est repoussée en direction de la paroi (41 ; 41') qui en est équipée.

L'invention concerne, encore, un dispositif de fermeture 1 présentant les caractéristiques décrites ci-dessus.

En particulier un tel dispositif de fermeture 1 comporte, d'une part, deux coulisses latérales 3, d'autre part, un tablier 2 présentant deux extrémités latérales 21 dont l'une coulisse à l'intérieur de l'une des coulisses latérales 3 tandis que l'autre coulisse à l'intérieur de l'autre coulisse latérale 3.

Dans ce dispositif de fermeture 1, les coulisses latérales 3 présentent les caractéristiques des coulisses 3 décrites ci-dessus.

Une autre caractéristique consiste en ce que les extrémités latérales 21 du tablier 2 comportent des moyens d'appui 9 contre lesquels peut prendre appui la lèvre (61 ; 61') du ou des joints (6 ; 6') que comportent les coulisses latérales 3.

C'est plus particulièrement l'extrémité libre 610 d'une telle lèvre (61 ; 61') qui peut, alors, prendre appui contre de tels moyens d'appui 9.

Tel que mentionné ci-dessus, le tablier 2 est constitué par un assemblage d'une pluralité de lames 20 présentant, chacune, deux extrémités libres 200. En fait, chacune de ces extrémités libres 200 coulisse à l'intérieur d'une des coulisses latérales 3 tandis que les extrémités libres 200 d'au moins une partie des lames 20 comportent lesdits moyens d'appui 9.

A ce propos, on observera que de tels moyens d'appui 9 peuvent être constitués par un épaulement 90 que comporte une partie externe d'un embout en partie engagé à l'intérieur d'une lame 20, ceci au niveau de l'extrémité libre 200 d'une telle lame 20.

Tel que mentionné ci-dessus, la lèvre (61 ; 61') du ou des joints (6 ; 6') peut prendre appui contre lesdits moyens d'appui 9. En fait, une telle lèvre (61 ; 61') prend appui contre ces moyens d'appui 9 lorsqu'il est exercé, sur le tablier 2, une contrainte (notamment exercée par le vent) susceptible de provoquer la sortie de l'extrémité latérale 21 du tablier 2 hors d'une coulisse latérale 3.

La présence de ces moyens d'appui 9 permet, alors et en combinaison avec la lèvre (61 ; 61') du ou des joints (6 ; 6'), de retenir le tablier 2 à l'intérieur des coulisses latérales 3 et d'empêcher la sortie du tablier 2 hors d'une telle coulisse 3. Ceci permet, donc, d'assurer la retenue de ce tablier 2 dans le plan horizontal (parallèlement au plan de ce tablier 2) ce qui est notamment bénéfique pour la tenue au vent de ce tablier 2.

A ce propos, on observera que le ou les joints (6 ; 6'), plus particulièrement la ou les lèvres (61 ; 61') de ce ou ces joints (6 ; 6'), présentent alors des caractéristiques techniques (notamment une rigidité suffisante) permettant d'assurer une telle retenue.

Là encore, le matériau, mentionné ci-dessus et dans lequel est réalisé l'élément de forme allongé (et, donc, ce ou ces joints 6, 6'), est choisi en sorte que cet élément présente de telles caractéristiques techniques.

Ainsi, le matériau, mentionné ci-dessus et dans lequel est réalisé l'élément de forme allongé, est, d'une part, déformable, flexible et/ou élastique, pour autoriser la réalisation d'un pli marqué et pérenne ainsi que pour permettre au joint de coulisse (6 ; 6') de prendre appui et de rester en appui contre le tablier 2 malgré les contraintes (notamment le vent) qui s'exercent sur ce tablier 2 et, d'autre part, suffisamment rigide pour permettre le maintien d'un tel joint (6 ; 6') à l'intérieur d'un logement (42 ; 42') du profilé 4 ainsi que pour assurer une retenue du tablier 2 à l'intérieur des coulisses latérales 3 et empêcher la sortie de ce tablier 2 hors d'une telle coulisse latérale 3. Ce matériau peut, alors, être de type semi-rigide.

Finalement, l'invention concerne un procédé de fabrication d'une coulisse 3 de dispositif de fermeture 1, cette coulisse 3 présentant les caractéristiques décrites ci-dessus.

Ce procédé consiste en ce que :
- on déroule une bande enroulée sur une bobine ;
- par-dessus une première portion longitudinale de la bande, on replie une deuxième portion longitudinale de cette bande, ceci pour la réalisation d'un joint (6 ; 6') de coulisse 3 présentant les caractéristiques mentionnées ci-dessus;
- on engage au moins cette première portion longitudinale de la bande à l'intérieur d'un logement (42 ; 42') que comporte une des parois (41 ; 41') d'un profilé 4 que comporte une coulisse 3.

En fait, ce procédé consiste en ce qu'on replie la bande par l'intermédiaire d'un train de galets.

A ce propos, on observera que, lorsqu'on replie la deuxième portion longitudinale de la bande par-dessus la première portion longitudinale de cette bande, on marque un pli pérenne à la jonction entre cette première portion longitudinale et cette deuxième portion longitudinale. En fait, on marque un tel pli pérenne en sorte que la bande reste pliée et en sorte d'empêcher que cette bande revienne dans une configuration plane.

Selon ce procédé on engage, à l'intérieur d'un logement (42 ; 42') d'une paroi (41 ; 41') d'un profilé 4 d'une coulisse 3, la première portion longitudinale de la bande (constituant en fait l'embase 60, 60' tel que susmentionné) mais également une partie de la deuxième portion longitudinale de la bande (constituant en fait la lèvre 61, 61' tel que susmentionné).

A ce propos, on observera que, lorsqu'on engage la première portion longitudinale à l'intérieur du logement (42 ; 42'), on enfile cette première portion longitudinale à l'intérieur d'un tel logement (42 ; 42'), plus particulièrement de manière automatique et/ou longitudinalement par rapport à un tel logement (42 ; 42').

On observera que, après avoir replié la deuxième portion longitudinale de la bande par-dessus la première portion longitudinale de cette bande et avant d'engager au moins cette première portion longitudinale de cette bande à l'intérieur du logement (42 ; 42'), on reprend la bande à l'aide d'une gaineuse automatique.

En ce qui concerne ladite bande, celle-ci est réalisée en un matériau permettant de réaliser les étapes du procédé décrit ci-dessus.

Selon un mode préféré de réalisation, cette bande est réalisée en un matériau polymère, de préférence du polyamide.

Cette bande présente, alors, une épaisseur comprise entre 0,3mm et 0,7mm, de préférence de l'ordre de 0,5mm.

De manière alternative, cette bande peut être réalisée en un matériau composite, de préférence constitué par un tissu enduit ou imprégné avec une résine.

La résine d'enduction ou d'imprégnation est constituée par une résine plastifiante et/ou rigidifiante.

Cette bande présente, alors, une épaisseur comprise entre 0,5mm et 1mm, de préférence de l'ordre de 0,7mm.

## Revendications

1. Coulisse (3) de dispositif de fermeture (1), cette coulisse (3) :
- comportant :
- un profilé (4), présentant une section en « U », et comportant un fond (40) ainsi que deux parois parallèles (41 ; 41'), s'étendant à partir de ce fond (40), et dont l'une au moins comporte un logement (42 ; 42') présentant une première gorge (43) ainsi qu'une deuxième gorge (44) ;
- au moins un joint (6 ; 6'), un tel joint (6 ; 6') étant constitué par un élément de forme allongée comportant, d'une part, une embase (60 ; 60'), positionnée à l'intérieur du logement (42 ; 42') de l'une des parois (41 ; 41') du profilé (4), comportant une première extrémité (600) libre ainsi qu'une deuxième extrémité (601) opposée à la première extrémité libre (600), et, d'autre part, une lèvre (61 ; 61') s'étendant, d'une part, à partir de cette embase (60 ; 60'), ceci de manière longitudinale et latérale et, d'autre part, au moins en partie à l'extérieur du logement (42 ; 42') de la paroi (41 ; 41') du profilé (4) ainsi qu'à l'intérieur de la coulisse (3);
- des moyens de maintien (7) pour maintenir le ou les joints (6 ; 6') à l'intérieur du ou des logements (42 ; 42'), ces moyens de maintien (7) étant constitués, d'une part, par la première gorge (43), que comportent ce ou ces logements (42 ; 42'), et qui reçoit la première extrémité libre (600) de l'embase (60 ; 60') de ce ou de ces joints (6 ; 6') et, d'autre part, par la deuxième gorge (44), que comportent ce ou ces logements (42 ; 42'), et qui reçoit la deuxième extrémité opposée (601) de l'embase (60 ; 60') de ce ou de ces joints (6 ; 6') ;
- **caractérisée par le fait que** :
- l'élément de forme allongée présente une section en « V » ;
- l'embase (60 ; 60') de cet élément de forme allongée est constituée par une des branches du « V » ;
- la lèvre (61 ; 61') de cet élément de forme allongée est constituée par l'autre branche du « V », se situe dans le prolongement de ladite embase (60 ; 60'), et s'étend à partir de la deuxième extrémité (601) de cette embase (60 ; 60'), ceci de manière longitudinale et latérale par rapport à cette deuxième extrémité (601) ainsi qu'en formant un angle aiguë avec cette embase (60 ; 60').

2. Coulisse (3) selon la revendication 1, **caractérisée par le fait que** l'élément de forme allongée est constitué par une bande comportant, d'une part, une première portion longitudinale constituant ladite embase (60 ; 60') et, d'autre part, une deuxième portion longitudinale, constituant ladite lèvre (61 ; 61'), s'étendant et repliée par-dessus au moins une partie de la première portion longitudinale.

3. Coulisse (3) selon l'une quelconque des revendications précédentes, **caractérisée par le fait que** la lèvre (61 ; 61') présente une largeur supérieure à la largeur de l'embase (60 ; 60') et s'étend par-dessus au moins une partie de l'embase (60 ; 60'), voire au-delà de cette embase (60 ; 60').

4. Coulisse (3) selon l'une quelconque des revendications précédentes, **caractérisée par le fait que** l'embase (60 ; 60'), respectivement la lèvre (61 ; 61'), du ou des joints (6 ; 6') s'étend en direction du fond (40) du profilé (4) de la coulisse (3), ceci à partir de la lèvre (61 ; 61'), respectivement à partir de l'embase (60 ; 60'), de ce ou ces joints (6 ; 6').

5. Coulisse (3) selon l'une quelconque des revendications précédentes, **caractérisée par le fait que** l'élément de forme allongée présente un pli marqué et pérenne à la jonction entre l'embase (60 ; 60') et la lèvre (61 ; 61').

6. Coulisse (3) selon l'une quelconque des revendications précédentes, **caractérisée par le fait que** l'élément de forme allongée est réalisé en un matériau déformable, flexible et/ou élastique.

7. Coulisse (3) selon l'une quelconque des revendications précédentes, **caractérisée par** le fait le ou les logements (42 ; 42'), d'une part, présentent une section en forme de « T » ou de queue d'aronde et, d'autre part, sont définis par une des parois (41 ; 41') du profilé (4) ainsi que par deux ailes longitudinales (420, 421) s'étendant à partir de cette paroi (41 ; 41') du profilé (4) et orientées en direction de l'autre paroi (41' ; 41) du profilé (4).

8. Coulisse (3) selon la revendication 7, **caractérisée par le fait que** lorsque le ou les logements (42 ; 42') présentent une section en queue d'aronde, les deux ailes (420, 421), définissant ce ou ces logements (42 ; 42'), sont inclinées l'une (420 ; 421) en direction de l'autre (421 ; 420) et s'étendent à partir de la paroi (41 ; 41') du profilé (4) en convergeant.

9. Coulisse (3) selon l'une quelconque des revendications 7 ou 8, **caractérisée par le fait que** la première gorge (43) que présente le logement (42 ; 42') de la paroi (41 ; 41') du profilé (4) est délimitée par cette paroi (41 ; 41') du profilé (4) ainsi que par une (420) des ailes (420, 421) définissant ce logement (42 ; 42') tandis que la deuxième gorge (44) que présente ce logement (42 ; 42') est délimitée par cette paroi (41 ; 41') du profilé (4) ainsi que par l'autre aile (421) définissant ce logement (42 ; 42').

10. Coulisse (3) selon l'une quelconque des revendications précédentes, **caractérisée par le fait que** la première extrémité libre (600) de l'embase (60 ; 60') du ou des joints (6 ; 6') est positionnée dans le fond de la première gorge (43) du ou des logements (42 ; 42') tandis que la deuxième extrémité opposée (601) de l'embase (60 ; 60') de ce ou de ces joints (6 ; 6') est positionnée dans le fond de la deuxième gorge (44) de ce ou de ces logements (42 ; 42').

11. Coulisse (3) selon l'une quelconque des revendications 7 ou 8, **caractérisée par le fait qu'**elle comporte au moins une butée (8), d'une part, contre laquelle prend appui la partie de la lèvre (61 ; 61') du ou des joints (6 ; 6') s'étendant à l'extérieur du ou des logements (42 ; 42'), et, d'autre part, qui est constituée par un retour (422), que comporte une (420) des ailes (420 ; 421) définissant ce ou ces logements (42 ; (42'), et qui est orienté dans une direction opposée à celle de l'autre aile (421) définissant ce ou ces logements (42 ; 42').

12. Dispositif de fermeture (1) comportant, d'une part, deux coulisses latérales (3), d'autre part, un tablier (2) présentant deux extrémités latérales (21) dont l'une coulisse à l'intérieur de l'une des coulisses latérales (3) tandis que l'autre coulisse à l'intérieur de l'autre coulisse latérale (3), **caractérisé par le fait que** les coulisses latérales (3) sont conformes à une coulisse (3) selon l'une quelconque des revendications précédentes et que les extrémités latérales (21) du tablier (2) comportent des moyens d'appui (9) contre lesquels prend appui la lèvre (61 ; 61') du ou des joints (6 ; 6') que comportent les coulisses latérales (3).

13. Dispositif de fermeture (1) selon la revendication 12, **caractérisé par le fait que** le tablier (2) est constitué par un assemblage d'une pluralité de lames (20) présentant, chacune, deux extrémités libres (200), et que, d'une part, chacune de ces extrémités libres (200) coulisse à l'intérieur d'une des coulisses latérales (3) et, d'autre part, les extrémités libres (200) d'au moins une partie des lames (20) comportent les moyens d'appui (9).

14. Procédé de fabrication d'une coulisse (3) selon l'une quelconque des revendications 1 à 11, ce procédé consistant en ce que :
- on déroule une bande enroulée sur une bobine ;
- par-dessus une première portion longitudinale de la bande, on replie une deuxième portion longitudinale de cette bande, ceci pour la réalisation d'un joint (6 ; 6') de coulisse (3) ;
- on engage au moins cette première portion longitudinale de la bande à l'intérieur d'un logement (42 ; 42') que comporte une des parois (41 ; 41') d'un profilé (4) que comporte une coulisse (3).

15. Procédé de fabrication selon la revendication 14, **caractérisé par le fait que**, lorsqu'on replie la deuxième portion longitudinale de la bande par-dessus la première portion longitudinale de cette bande, on marque un pli pérenne à la jonction entre cette première portion longitudinale et cette deuxième portion longitudinale.

## Patentansprüche

1. Führung (3) einer Verschlußvorrichtung (1), wobei diese Führung (3):
- Folgendes umfasst:
- ein Profil (4), das einen U-förmigen Querschnitt aufweist und einen Boden (40) sowie zwei parallele Wände (41 ; 41') umfasst, die sich ab diesem Boden (40) erstrecken, und von denen mindestens eine eine Aussparung (42 ; 42') umfasst, die eine erste Nut (43) und eine zweite Nut (44) aufweist;
- mindestens eine Dichtung (6 ; 6), wobei eine solche Dichtung (6; 6') aus einem länglichen Element besteht, das einerseits eine Basis (60 ; 60'), die in der Aussparung (42 ; 42') einer der Wände (41 ; 41') des Profils (4) positioniert ist, die ein freies erstes Ende (600) sowie ein zweites, dem ersten freien Ende (600) gegenüberliegendes Ende (601) und andererseits eine Lippe (61 ; 61'), die sich einerseits ab dieser Basis (60 ; 60'), und zwar in Längsrichtung und seitlich, und andererseits zumindest teilweise außerhalb der Aussparung (42 ; 42') der Wand (41 ; 41') des Profils (4) sowie innerhalb der Führung (3) erstreckt, aufweist;
- Haltemittel (7) zum Halten der Dichtung bzw. Dichtungen (6 ; 6') innerhalb der Aussparung bzw. Aussparungen (42 ; 42'), wobei diese Haltemittel (7) einerseits aus der ersten Nut (43), welche diese Aussparung bzw. Aussparungen (42 ; 42') umfassen, und welche das erste freie Ende (600) der Basis (60 ; 60') dieser Dichtung bzw. Dichtungen (6 ; 6') aufnimmt, und andererseits aus der zweiten Nut (44), welche diese Aussparung bzw. Aussparungen (42 ; 42') umfassen, und welche das gegenüberliegende zweite Ende (601) der Basis (60 ; 60') dieser Dichtung bzw. Dichtungen (6 ; 6') aufnimmt, bestehen ;
- **dadurch gekennzeichnet, dass** :
- das längliche Element einen V-förmigen Querschnitt aufweist ;
- die Basis (60 ; 60') dieses länglichen Elements aus einem der Schenkel des V besteht;
- die Lippe (61 ; 61') dieses länglichen Elements aus dem anderen Schenkel des V besteht, sich in der Verlängerung der besagten Basis (60 ; 60') befindet und sich ab dem zweiten Ende (601) dieser Basis (60; 60'), und zwar in Längsrichtung und seitlich relativ zu diesem zweiten Ende (601) und indem sie mit dieser Basis einen spitzen Winkel (60 ; 60') einschließt, erstreckt.

2. Führung (3) nach Anspruch 1, **dadurch gekennzeichnet, dass** das längliche Element aus einem Band besteht, das einerseits einen ersten Längsteil, der die besagte Basis (60 ; 60') bildet, und andererseits einen zweiten Längsteil umfasst, der die besagte Lippe (61 ; 61') bildet und sich über zumindest einen Teil des ersten Längsteils erstreckt.

3. Führung (3) nach irgendeinem der vorhergehenden Ansprüche, **dadurch gekennzeichnet, dass** die Lippe (61 ; 61') eine Breite aufweist, die größer als die Breite der Basis (60 ; 60') ist, und sich über mindestens einen Teil der Basis (60 ; 60'), sogar über diese Basis (60 ; 60') hinaus, erstreckt.

4. Führung (3) nach iregendeinem der vorhergehenden Ansprüche, **dadurch gekennzeichnet, dass** sich die Basis (60 ; 60') bzw. die Lippe (61 ; 61') der Dichtung bzw. Dichtungen (6 ; 6') in Richtung auf den Boden (40) des Profils (4) der Führung (3) erstreckt, und zwar ab der Lippe (61 ; 61') bzw. ab der Basis (60 ; 60') dieser Dichtung bzw. Dichtungen (6 ; 6').

5. Führung (3) nach irgendeinem der vorhergehenden Ansprüche, **dadurch gekennzeichnet, dass** das längliche Element an der Verbindungsstelle zwischen der Basis (60 ; 60') und der Lippe (61 61') eine ausgeprägte und dauerhafte Falte aufweist.

6. Führung (3) nach irgendeinem der vorhergehenden Ansprüche, **dadurch gekennzeichnet, dass** das längliche Element aus einem verformbaren, flexiblen und/oder elastischen Material gefertigt ist.

7. Führung (3) nach irgendeinem der vorhergehenden Ansprüche, **dadurch gekennzeichnet, dass** die Aussparung bzw. Aussparungen (42 ; 42') einerseits einen T- oder schwalbenschwanzförmigen Querschnitt aufweisen und andererseits durch eine der Wände (41 ; 41') des Profils (4) sowie durch zwei Längsflügel (420, 421) definiert sind, die sich ab dieser Wand (41 ; 41') des Profils (4) erstrecken und in Richtung auf die anderen Wand (41'; 41) des Profils (4) ausgerichtet sind.

8. Führung (3) nach Anspruch 7, **dadurch gekennzeichnet, dass**, wenn die Aussparung bzw. Aussparungen (42 ; 42') einen Schwalbenschwanzquerschnitt aufweisen, die beiden Flügel (420, 421), die diese Aussparung bzw. Aussparungen (42 ; 42') definieren, die eine (420 ; 421) in Richtung auf die andere (421, 420) geneigt sind und sich ab der Wand (41 ; 41') des Profils (4) erstrecken, während sie zusammenlaufen.

9. Führung (3) nach irgendeinem der Ansprüche 7 oder 8, **dadurch gekennzeichnet, dass** die erste Nut (43), welche die Aussparung (42 ; 42') der Wand (41 ; 41') des Profils aufweist (4), durch diese Wand (41 ; 41') des Profils (4) sowie durch einen (420) der Flügel (420, 421), der die Aussparung (42 ; 42') definiert, begrenzt ist, während die zweite Nut (44), welche diese Aussparung (42 ; 42') aufweist, durch diese Wand (41 ; 41') des Profils (4) sowie durch den anderen Flügel (421), der diese Aussparung (42 ; 42') definiert, begrenzt ist.

10. Führung (3) nach irgendeinem der vorhergehenden Ansprüche, **dadurch gekennzeichnet, dass** das erste freie Ende (600) der Basis (60 ; 60') der Dichtung bzw. Dichtungen (6 ; 6') am Boden der ersten Nut (43) der Aussparung bzw. Aussparungen (42 ; 42') positioniert ist, während das gegenüberliegende zweite Ende (601) der Basis (60 ; 60') dieser Dichtung bzw. Dichtungen (6 ; 6') am Boden der zweiten Nut (44) dieser Aussparung bzw. Aussparungen (42 ; 42') positioniert ist.

11. Führung (3) nach irgendeinem der Ansprüche 7 oder 8, **dadurch gekennzeichnet, dass** sie mindestens einen Anschlag (8) umfasst, einerseits an dem der Teil der Lippe (61 ; 61') der Dichtung bzw. Dichtungen (6 ; 6'), der sich außerhalb der Aussparung bzw. Aussparungen (42 ; 42') erstreckt, anliegt, und andererseits der aus einer Biegung (422) besteht, welche einer (420) der Flügel (420 ; 421), der diese Aussparung bzw. Aussparungen (42 ; 42') definiert, umfasst, und der in einer Richtung orientiert ist, die derjenigen des anderen Flügels (421), der diese Aussparung bzw. Aussparungen (42 ; 42') definiert, entgegengesetzt ist.

12. Verschlußvorrichtung (1), umfassend einerseits zwei seitliche Führungen (3), andererseits eine Decke (2), die zwei seitliche Enden (21) aufweist, von denen eines innerhalb einer der seitlichen Führungen (3) gleitet, während das andere innerhalb der anderen seitlichen Führung (3) gleitet, **dadurch gekennzeichnet, dass** die seitlichen Führungen (3) einer Führung (3) nach irgendeinem der vorhergehenden Ansprüche entsprechen, und dass die seitlichen Enden (21) der Decke (2) Abstützmittel (9) umfassen, an denen die Lippe (61 ; 61') der Dichtung bzw. Dichtungen (6 ; 6'), welche die seitlichen Führungen (3) umfassen, anliegt.

13. Verschlußvorrichtung (1) nach Anspruch 12, **dadurch gekennzeichnet, dass** die Decke (2) aus einer Zusammenfügung einer Mehrzahl von Leisten (20) besteht, die jeweils zwei freien Enden (200) aufweisen, und dass einerseits jedes dieser freien Enden (200) innerhalb einer der seitlichen Führungen (3) gleitet und andererseits die freien Enden (200) von mindestens einem Teil der Leisten (20) die Abstützmittel (9) umfassen.

14. Verfahren zur Herstellung einer Führung (3) nach irgendeinem der Ansprüche 1 bis 11, wobei das Verfahren darin besteht, dass :
- ein auf einer Spule aufgewickeltes Band abgewickelt wird ;
- über einen ersten Längsteil des Bandes ein zweiter Längsteil dieses Bandes gefaltet wird, und zwar zum Bilden einer Dichtung (6 ; 6') der Fihrung (3);
- wenigstens dieser erste Längsteil des Bandes in eine Aussparung (42 ; 42') eingeführt wird, welche eine der Wände (41 ; 41') eines Profils (4) umfasst, welche eine Führung (3) umfasst.

15. Verfahren zur Herstellung nach Anspruch 14, **dadurch gekennzeichnet, dass** beim Falten des zweiten Längsteils des Bandes über den ersten Längsteil dieses Bandes eine dauerhafte Falte an der Verbindungsstelle zwischen diesem ersten Längsteil und diesem zweiten Längsteil ausgeprägt wird.

## Claims

1. A slide (3) of a closing device (1), this slide (3) :
- including :
- a profile (4) having a U-shaped cross-section and including a bottom (40) as well as two parallel walls (41 ; 41') extending from this bottom (40), and at least one of which includes a recess (42 ; 42') having a first groove (43) as well as a second groove (44) ;
- at least one gasket (6 ; 6'), such a gasket (6 ; 6') consisting of an elongate element including, on the one hand, a base (60 ; 60') positioned inside the recess (42 ; 42') of one of the walls (41 ; 41') of the profile (4), including a first free end (600) as well as a second end (601) opposite the first free end (600), and on the other hand, a lip (61 ; 61') extending, on the one hand, from this base (60 ; 60'), longitudinally and laterally, and on the other hand, at least partly outside the recess (42; 42') of the wall (41; 41') of the profile (4) as well as inside the slide (3) ;
- holding means (7) for holding the gasket or gaskets (6 ; 6') inside the recess or recesses (42 ; 42'), these holding means (7) consisting, on the one hand, of the first groove (43), which this or these recesses (42 ; 42') include and which receives the first free end (600) of the base (60 ; 60') of this or these gaskets (6 ; 6'), and on the other hand, of the second groove (44), which this or these recesses (42 ; 42') include and which receives the opposite second end (601) of the base (60 ; 60') of this or these gaskets (6 ; 6') ;
- wherein :
- the elongate element has a V-shaped cross-section ;
- the base (60 ; 60') of this elongate element consists of one of the legs of the V;
- the lip (61 ; 61') of this elongate element consists of the other leg of the V, is located in the extension of said base (60 ; 60') and extends from the second end (601) of this base (60 ; 60'), longitudinally and laterally with respect to this second end (601) as well as while forming an acute angle with this base (60 ; 60').

2. The slide (3) according to claim 1, wherein the elongate member consists of a strip comprising, on the one hand, a first longitudinal portion forming said base (60 ; 60'), and on the other hand, a second longitudinal portion forming said lip (61 ; 61'), extending and folded over at least a portion of the first longitudinal portion.

3. The slide (3) according to any one of the preceding claims, wherein the lip (61; 61') has a width larger than the width of the base (60 ; 60') and extends over at least a portion of the base (60 ; 60'), even beyond this base (60 ; 60').

4. The slide (3) according to any one of the preceding claims, wherein the base (60 ; 60') or the lip (61 ; 61'), respectively, of the gasket or gaskets (6 ; 6') extends towards the bottom (40) of the profile (4) of the slide (3), from the lip (61 ; 61') or from the base (60 ; 60'), respectively, of this or these gaskets (6 ; 6').

5. The slide (3) according to any one of the preceding claims, wherein the elongate element has a marked and durable fold at the junction between the base (60 ; 60') and the lip (61 ; 61').

6. The slide (3) according to any one of the preceding claims, wherein the elongate member is made of a deformable, flexible and/or elastic material.

7. The slide (3) according to any one of the preceding claims, wherein the recess or recesses (42 ; 42'), on the one hand, have a T-shaped or dovetail cross-section, and on the other hand, are defined by one of the walls (41 ; 41') of the profile (4) as well as by two longitudinal wings (420, 421) extending from this wall (41 ; 41') of the profile (4) and oriented towards the other wall (41' ; 41) of the profile (4).

8. The slide (3) according to claim 7, wherein, when the recess or recesses (42 ; 42') have a dovetail cross-section, the two wings (420, 421) defining this or these recesses (42 ; 42') are inclined one (420 ; 421) towards the other one (421 ; 420) and extend from the wall (41 ; 41') of the profile (4) while converging.

9. The slide (3) according to any one of claims 7 or 8, wherein the first groove (43), which the recess (42 ; 42') of the wall (41 ; 41') of the profile (4) has, is delimited by this wall (41 ; 41') of the profile (4) as well as by one (420) of the wings (420, 421) defining this recess (42 ; 42'), while the second groove (44), which this recess (42 ; 42') has, is delimited by this wall (41 ; 41') of the profile (4) as well as by the other wing (421) defining this recess (42 ; 42').

10. The slide (3) according to any one of the preceding claims, wherein the first free end (600) of the base (60 ; 60') of the gasket or gaskets (6 ; 6') is positioned on the bottom of the first groove (43) of the recess or recesses (42 ; 42'), while the opposite second end (601) of the base (60 ; 60') of this or these gaskets (6 ; 6') is positioned on the bottom of the second groove (44) of this or these recesses (42 ; 42').

11. The slide (3) according to any one of claims 7 or 8, wherein it includes at least one stop (8), on the one hand, against which rests the portion of the lip (61 ; 61') of the gasket or gaskets (6 ; 6') extending outside the recess or recesses (42 ; 42'), and on the other hand, which consists of a bend (422) one (420) of the wings (420 ; 421) defining this or these recesses (42 ; 42') includes and which is oriented in a direction opposite that of the other wing (421) defining this or these recesses (42 ; 42').

12. A closing device (1) including, on the one hand, two lateral slides (3), on the other hand, an apron (2) having two lateral ends (21), one of which slides inside one of the lateral slides (3), while the other one slides inside the other lateral slide (3), wherein the lateral slides (3) are in conformity with a slide (3) according to any one of the preceding claims and the lateral ends (21) of the apron (2) include resting means (9) against which rests the lip (61 ; 61') of the gasket or gaskets (6 ; 6') the lateral slides (3) include.

13. The closing device (1) according to claim 12, wherein the apron (2) is formed of an assembling of a plurality of slats (20) each having two free ends (200), and on the one hand, each of these free ends (200) slides inside one of the lateral slides (3), and on the other hand, the free ends (200) of at least part of the slats (20) include the resting means (9).

14. A method for manufacturing a slide (3) according to any one of claims 1 to 11, this method consisting in that:
- a strip wound up on a reel is unwound;
- over a first longitudinal portion of the strip is folded a second longitudinal portion of this strip, in order to form a gasket (6 ; 6') of a slide (3);
- at least this first longitudinal portion of the strip is inserted into a recess (42 ; 42') included in one of the walls (41 ; 41') of a profile (4) a slide (3) includes.

15. The manufacturing method according to claim 14, wherein, when folding the second longitudinal portion of the strip above the first longitudinal portion of this strip, a perennial fold is marked at the junction between this first longitudinal portion and this second longitudinal portion.
